# EUROPÄISCHE PATENTSCHRIFT

(11) **EP 3 038 220 B1**
(45) Veröffentlichungstag und Bekanntmachung des Hinweises auf die Patenterteilung: **12.04.2017**
(21) Anmeldenummer: 14199957.3
(22) Anmeldetag: 23.12.2014
(51) Int. Cl.: H02G 3/22

(54) **Leitungsdurchführung zum Hindurchführen einer Leitung durch ein Wand- oder Bodenelement**
Circuit feed-through for guiding a line through a wall or floor element
Passage de câble permettant de faire passer une conduite dans un élément de sol ou de paroi

(43) Veröffentlichungstag der Anmeldung: 29.06.2016
(73) Patentinhaber: Hauff-Technik GmbH & Co. KG, 89568 Hermaringen (DE)
(72) Erfinder: Kurz, Ralf, 89537 Giengen (DE); Burkhardt, Andreas, 89555 Heidenheim (DE)
(74) Vertreter: König Szynka Tilmann von Renesse Patentanwälte Partnerschaft mbB

(56) Entgegenhaltungen:
- EP-A1- 2 405 170
- DE-A1- 3 733 237
- DE-U1- 9 001 219

## Beschreibung

Die vorliegende Erfindung betrifft eine Leitungsdurchführung zum Hindurchführen einer Leitung durch eine Durchlassöffnung in einem Wand- oder Bodenelement.

In einem typischen Anwendungsfall kann die Leitungsdurchführung bspw. in einer Durchlassöffnung in einer Gebäudewand montiert werden und kann durch die Leitungsdurchführung ein Kabel von der einen Seite der Gebäudewand auf die entgegengesetzte Seite verlegt werden. Die Durchlassöffnung kann bspw. als Bohrung in das Mauerwerk oder den Beton der Gebäudewand eingebracht sein. Die Leitungsdurchführung weißt eine Durchführungshülse auf, welche dann bspw. in die Durchlassöffnung gesetzt zur Befestigung darin mit einem Harzmaterial umspritzt wird. Das Harzmaterial wird in diesem Fall also in einen von der Durchführungshülse und der Laibung der Durchlassöffnung begrenzten Ringraum injiziert, und das ausgehärtete Harz hält die Leitungsdurchführung in Position.

Aus der EP 2 405 170 A1 ist eine Durchführung mit einer verkippbar an einer Montageplatte gelagerten Durchführungshülse bekannt. Für die verkippbare Lagerung sind in einer Durchgangsöffnung der Montageplatte zwei einander gegenüberliegende Zapfen vorgesehen, die bei zusammengesetzter Durchführung jeweils in einer komplementären Ausnehmung außenseitig der Durchführungshülse sitzen und eine Schwenkachse für die Verkippbarkeit der Durchführungshülse definieren. Die Durchführungshülse ist aus einer 0°-Position zu positiven und negativen Winkeln verkippbar und steht in dieser 0°-Position senkrecht auf der Wandfläche.

Der vorliegenden Erfindung liegt die Aufgabe zugrunde, eine besonders vorteilhafte Leitungsdurchführung abzugeben.

Erfindungsgemäß löst diese Aufgabe eine Leitungsdurchführung zum Hindurchführen einer Leitung durch eine Durchlassöffnung in einem Wand- oder Bodenelement, mit einer Durchführungshülse, durch welche die Leitung entlang einer Mittenachse der Durchführungshülse (Durchführungshülsen-Mittenachse) hindurchführbar ist, und einem Flanschteil zur Anlage an einer Seitenfläche des Wand- oder Bodenelements, wobei die Durchführungshülse an dem Flanschteil verkippbar gelagert ist, und zwar zur Veränderung eines Kippwinkels zwischen der Durchführungshülsen-Mittenachse und einer Flächennormalen, welche senkrecht auf einer durch die Flanschteil-Anlage festgelegten Ebene und somit der Seitenfläche des Wand- oder Bodenelements bei montierter Leitungsdurchführung steht, in welcher Lagerung die Durchführungshülse zwischen zwei Endstellungen verkippt werden kann und mittig dazwischen eine Mittenstellung einnimmt, wobei die Durchführungshülsen-Mittenachse in den Endstellungen und der Mittenstellung in einer gemeinsamen, also derselben Verkippebene liegt, und wobei die Durchführungshülsen-Mittenachse in der Mittenstellung gegenüber der Flächennormalen um mindestens 10° verneigt ist.

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Die Durchführungshülse kann also gegenüber dem Flanschteil verkippt werden. Die Leitungsdurchführung kann somit bspw. auch im Falle einer sich schräg erstreckenden Durchlassöffnung montiert werden, wobei sich dann zugleich die Durchführungshülsen-Mittenachse (im Folgenden auch nur noch "Mittenachse") im Wesentlichen parallel zur Längsrichtung der Durchlassöffnung erstrecken und das Flanschteil flächig an der Seitenfläche des Wand- oder Bodenelements anliegen kann (im Folgenden wird der Einfachheit halber bloß noch auf ein Wandelement Bezug genommen, ist die entsprechende Offenbarung jedoch gleichermaßen auch auf ein Bodenelement zu lesen).

Bei der erfindungsgemäßen Leitungsdurchführung ist nun bereits die Mittenstellung, also bei unterstellter Verkippbarkeit zu positiven und negativen, betragsmäßig denselben Winkeln gewissermaßen eine 0°-Position, schon für sich verkippt. Von der Mittenstellung ausgehend ist der jeweilige Winkel zu beiden Endstellungen gleich groß; es können also die beiden Endstellungen durch Verkippen in entgegengesetzte Richtungen um betragsmäßig denselben Winkel erreicht werden. In den Endstellungen ist jeweils die in Abhängigkeit von der Lagerung maximal mögliche Verkippung in der Verkippebene erreicht (ist also jeweils in der Verkippebene nur noch ein Verkippen zur jeweilig anderen Endstellung hin möglich).

Die Durchführungshülsen-Mittenachse ist vorzugsweise eine Mittenachse eines Rohrelements der Durchführungshülse. Im bevorzugten Fall eines zumindest abschnittsweise hohlzylinderförmigen Rohrelements entspricht die Mittenachse der Rotationsachse des Hohlzylinders, also der Längsachse des Rohrelements; die Mittenachse liegt dann parallel zur axialen Richtung. Bevorzugt erstreckt sich bei montierter Leitungsdurchführung das hohlzylinderförmige Rohrelement der Durchführungshülse dann zumindest in die Durchlassöffnung hinein, vorzugsweise vollständig hindurch. Das hohlzylinderförmige Rohrelement geht dann vorzugsweise in ein an dem Flanschteil gelagertes Lagerelement der Durchführungshülse über.

Die beiden Endstellungen und die Mittenstellung werden unter Bezugnahme auf die "Verkippebene" betrachtet, in welcher die Durchführungshülsen-Mittenachse sowohl in den beiden Endstellungen als auch in der Mittenstellung liegt. Anders ausgedrückt legt die Verkippebene gemeinsam mit der Lagerung die Position der Durchführungshülsen-Mittenachse in den Endstellungen und der Mittenstellung fest; die Verkippebene bestimmt ein Bezugssystem innerhalb dessen die aufgrund der Lagerung mögliche Verkippbarkeit betrachtet wird. Bevorzugt ist eine Lagerung, in welcher die Durchführungshülse mit einer vollständig in der Verkippebene liegenden Bewegung zwischen den beiden Endstellungen verkippt werden kann, also mit einer Bewegung zwischen den Endstellungen verkippbar ist, bei welcher die Durchführungshülsen-Mittenachse fortwährend in der Verkippebene liegt (z. B. Kniegelenk oder Kugelgelenk).

Im Allgemeinen kann es bspw. auch nur genau eine Verkippebene geben, nämlich bspw. im Falle des Kniegelenks. Bevorzugt ist jedoch eine Lagerung, bei welcher die Durchführungshülse in beliebig vielen Ebenen verkippt werden kann, etwa das Kugelgelenk. Generell wird als Verkippebene jene Ebene zugrunde gelegt, in welcher die Änderung des Kippwinkels in Abhängigkeit von der in der Ebene liegenden Bewegung maximal ist (in Abhängigkeit von der Bewegung, bei welcher die Durchführungshülsen-Mittenachse fortwährend in der Ebene liegt). Vorzugsweise ist der zwischen den beiden Endstellungen in der Verkippebene überstrichene Kippwinkelbereich der größte zugängliche Kippwinkelbereich; in der Verkippebene ist also der zugängliche Kippwinkelbereich (zwischen Durchführungshülsen-Mittenachse und Flächennormale) am größten, in anderen Ebenen (soweit vorhanden) kleiner.

In der Mittenstellung zwischen den Endstellungen ist nun also jedenfalls die Durchführungshülse bereits ein Stück weit verneigt (ist die Durchführungshülsen-Mittenachse zur Flächennormalen verneigt), was vorteilhafterweise den mit der Lagerung der Durchführungshülse effektiv zugänglichen Winkelbereich vergrößert. Es kann also mit derselben Lagerung (die eine Verkippung in einem bestimmten Winkelbereich ermöglicht) die Durchführungshülse weiter gegenüber der Flächennormalen verkippt werden als im Vergleichsfall mit einer nicht bereits für sich verkippten Mittenstellung. Etwa durch Drehen der Leitungsdurchführung im Gesamten kann dann gleichwohl jede beliebige Richtung zugänglich sein, kann also bspw. sowohl eine um 45° nach oben als auch eine um 45° nach unten gegenüber der Flächennormalen verkippt eine Gebäudewand durchsetzende Leitung mit demselben Typ Leitungsdurchführung montiert werden.

Die Durchführungshülsen-Mittenachse soll in der Mittenstellung um mindestens 10° gegenüber den Flächennormalen verneigt sein, wobei mindestens 12,5°, 15°, 17,5°, 20° bzw. 22° in der Reihenfolge der Nennung zunehmend weiter bevorzugt sind; mögliche Obergrenzen können bspw. bei dieser Reihenfolge zunehmend bevorzugt höchstens 35°, 32,5°, 30°, 27,5°, 25° bzw. 23° liegen. Bevorzugt ist eine Ausgestaltung der Leitungsdurchführung der Art, dass in einer bestimmten Kippstellung der Durchführungshülse die Durchführungshülsen-Mittenachse parallel zu der Flächennormalen liegt, sodass die Leitungsdurchführung also bspw. auch im Falle einer gerade (parallel zur Flächennormalen) durch das Wandelement geführten Leitung eingesetzt werden kann. Weiter bevorzugt kann diese Kippstellung der Durchführungshülse mit einer der beiden Endstellungen zusammenfallen, was den effektiv zugänglichen Winkelbereich maximiert (bei gegebenem mit der Lagerung zugänglichen Kippwinkelbereich).

In bevorzugter Ausgestaltung liegt die Durchführungshülsen-Mittenachse in einer der beiden Endstellungen um mindestens 40° zu der Flächennormalen verkippt, vorzugsweise um mindestens 43°, besonders bevorzugt um mindestens 45°. Die hier in Rede stehende Endstellung ist die im Vergleich zu der anderen Endstellung stärker gegenüber der Flächennormalen verkippte Endstellung. Mögliche Obergrenzen für deren Verkippung ergeben sich auch aus dem mit der Lagerung generell zugänglichen Kippwinkelbereich und können bspw. bei höchstens 60°, 55° bzw. 50° liegen (in der Reihenfolge der Nennung zunehmend bevorzugt. Einfluss auf die Verkippung in der Endstellung hat auch das Maß der Verneigung in der Mittenstellung.

Im Allgemeinen könnte eine Lagerung, welche ein Verkippen in verschiedenen Ebenen ermöglicht, bspw. auch mit einem Faltenbalg realisiert sein. Die Durchführungshülse und das Flanschteil könnten dann bspw. sogar auch einstückig ausgeführt sein, etwa als Mehrkomponenten-Spritzgussteil.

Vorzugsweise sind Flanschteil und Durchführungshülse jedoch mehrstückig zueinander. Dabei hat das Flanschteil eine Anlagefläche und die Durchführungshülse eine Anlagefläche und sind diese Anlageflächen als ein Gelenk der Lagerung in Kontakt miteinander, berühren sie sich also zumindest bereichsweise. In einem Schnitt betrachtet, wobei die Schnittebene der Verkippebene entspricht, sind die Anlageflächen jeweils kreisförmig, haben sie also die Form eines Kreisabschnitts. Das Gelenk könnte also bspw. auch ein Kniegelenk mit zylinderförmigen Anlageflächen sein.

Vorzugsweise ist das Gelenk jedoch ein Kugelgelenk mit Kugelkopf und Pfannenteil, sind die Anlageflächen also sphärisch. Auch eine Kontaktfläche, in welcher die Anlageflächen aneinander anliegen, ist dann sphärisch. Mit einem Kugelgelenk kann nun bspw. von der Mittenstellung in die beiden Endstellungen jeweils ein Winkelbereich von maximal 30°, üblicherweise maximal 25°, zugänglich sein. In der Regel gilt dies dann rotationssymmetrisch auch für alle anderen Ebenen. Indem nun erfindungsgemäß bereits die Mittenstellung verkippt zur Flächennormalen liegt, kann bspw. sowohl eine das Wandelement gerade durchsetzende Leitung als auch um eine 45° geneigte Leitung durch die Durchführungshülse geführt werden.

Das Kugelgelenk ist weiter bevorzugt derart vorgesehen, dass der Kugelkopf mit einer Hinterschneidung in dem Pfannenteil gehalten ist, also die Pfanne die Kugel zumindest in Abschnitten über den Äquator hinaus umgreift. Bevorzugt ist der Kugelkopf reversibel aus dem Pfannenteil herausnehm- und wieder einsetzbar. Auch in dieser Hinsicht kann bevorzugt sein, dass die Pfanne die Kugel nicht vollständig umlaufend über den Äquator hinaus umgreift, sondern in zungenartigen Abschnitten. Diese können dann beim Einsetzen und Herausnehmen des Kugelkopfes ein Stück weit nach außen (von der Durchführungshülsen-Längsachse weg) ausgelenkt werden, dann jedoch wieder ihre ursprüngliche Lage einnehmen und bei zusammengesetztem Kugelgelenk den Kugelkopf halten.

Auch unabhängig von dieser Ausgestaltung im Einzelnen ist vorzugsweise der Kugelkopf an der Durchführungshülse und das Pfannenteil an dem Flanschteil vorgesehen. Generell liegt am Flanschteil die Gelenk-Anlagefläche der Flanschteil-Anlage bevorzugt entgegengesetzt, weist sie also von dem Wandelement weg. Insbesondere ist dann also die Pfannen-Anlagefläche am Flanschteil dem Wandelement abgewandt, anders als die entgegengesetzte Flanschteil-Anlage.

Generell ist die "Flanschteil-Anlage" übrigens bevorzugt eine Anlagefläche des Flanschteils (im Allgemeinen wäre bspw. auch eine linienförmige Anlage denkbar, die gleichwohl eine Ebene festlegt). Diese Flanschteil-Anlagefläche liegt dann in der Ebene, auf welcher die hinsichtlich des Kippwinkels in Bezug genommene Flächennormale senkrecht steht; bei montierter Leitungsdurchführung liegt dann auch die Seitenfläche des Wandelements in dieser Ebene. Bei montierter Leitungsdurchführung liegt die Flanschteil-Anlagefläche an der Seitenfläche an und steht die Flächennormale senkrecht auf der Seitenfläche.

Bei einer bevorzugten Weiterbildung einer Leitungsdurchführung, bei welcher Flanschteil und Durchführungshülse zueinander mehrstückig sind und jeweils eine Anlagefläche aufweisen, ist zumindest eine der Anlageflächen zumindest bereichsweise aus einem weichen und somit gut dichtenden Material geformt. "Zumindest bereichsweise" meint in diesem Zusammenhang bspw., dass mindestens 20 %, 40 %, 60 % bzw. 80 % (in der Reihenfolge der Nennung zunehmend bevorzugt) der Anlagefläche aus dem weichen Material geformt sind. Bezogen auf einen Umlauf um die Durchführungshülsen-Mittenachse ist das weiche Material bevorzugt vollständig umlaufend vorgesehen, sodass es einen Durchtritt von Feuchtigkeit durch das Gelenk zumindest erschwert.

Das Werkstück mit der entsprechenden Anlagefläche, also das Flanschteil oder die Durchführungshülse, kann bspw. ein Mehrkomponenten-Spritzgussteil sein, wobei dann die Anlagefläche als Komponente mit dem weichen Material gespritzt ist. Generell soll das "weiche Material" eine Shore-Härte (A) von höchstens 70 Shore, in dieser Reihenfolge zunehmend bevorzugt höchstens 65, 60, 55, 50, 45 bzw. 40 Shore, haben; mögliche Untergrenzen können bspw. bei mindestens 20, 25 bzw. 30 Shore liegen.

Ein Vorteil der zumindest einen bereichsweise aus weichem Material geformten Anlagefläche lässt sich insbesondere auch anhand einer bevorzugten Form der Montage erläutern (die aber ausdrücklich auch ganz allgemein offenbart sein soll). Bevorzugt wird nämlich die Durchführungshülse in einer Durchlassöffnung in eine Gebäudewand gesetzt und das Flanschteil in Anlage an der Seitenfläche der Gebäudewand gebracht (mit seiner Flanschteil-Anlage, bevorzugt seiner Flanschteil-Anlagefläche, siehe vorne). Vorzugsweise ragt in dieser Anordnung dann die Durchführungshülse an der der Seitenfläche mit dem Flanschteil entgegengesetzten Seitenfläche der Gebäudewand aus der Durchlassöffnung heraus. Auf die Durchführungshülse kann dann nämlich eine Zugspannung aufgebracht werden, womit das Flanschteil in seine Anlage an die Seitenfläche der Gebäudewand gezogen wird. Dann wird zur Befestigung der Leitungsdurchführung in der Gebäudewand bevorzugt ein fließfähiges, dann erstarrendes Material in die Durchlassöffnung eingebracht. Anschließend kann eine bevorzugt zum Aufbringen der Zugspannung auf die Durchführungshülse vorgesehene Spannvorrichtung entfernt werden und ist die Leitungsdurchführung mit einem zuverlässig an der Seitenfläche der Gebäudewand anliegenden Flanschteil montiert.

Beim Aufbringen einer solchen Zugspannung werden nun auch die Anlageflächen des Gelenks aneinander angedrückt, wobei im Falle des weichen Materials besonders gut ein dichter Sitz erreicht werden kann. Vorzugsweise ist übrigens auch die Flanschteil-Anlagefläche aus einem weichen Material vorgesehen, auch unabhängig von einer weichen Gelenk-Anlagefläche (es wird auf die vorstehende Definition von "weichem Material" verwiesen). Etwa bei einer eben beschriebenen Montage wird dann diese Anlagefläche des Flanschteils dichtend an die Seitenfläche der Gebäudewand gedrückt, was einen Wasserdurchtritt zwischen Flanschteil und Seitenfläche jedenfalls erheblich erschwert.

Bei einer bevorzugten Ausführungsform ist die Durchführungshülse mehrstückig aus einem Lagerelement, das an dem Flanschteil verkippbar gelagert ist, und einem Rohrelement zum Hindurchführen der Leitung durch das Wandelement aufgebaut. Das Rohrelement kann bspw. ein Extrusionsteil sein; das Lagerelement kann bspw. ein Spritzgussteil sein, vorzugsweise ein Einkomponenten-Spritzgussteil. Eine Durchgangsöffnung für die Leitung in dem Lagerelement kann (in dem insoweit gegebenenfalls etwas komplexer geformten Spritzgussteil) dann bspw. auch mit einem variierenden Durchmesser geformt sein. Dies kann bspw. dem Dichten zu der Leitung hin dienen, etwa indem eine innenseitig umlaufende Dichtlippe dann selbst an der Leitung anliegt und/oder ein in die Durchgangsöffnung gesetztes, dann an der Leitung anliegendes Dichtelement in Position gehalten wird. Vorzugsweise wird nämlich eine hindurchgeführte Leitung innerhalb des Lagerelements zur Durchführungshülse hin gedichtet.

Bevorzugt ist bei einer mehrstückigen Durchführungshülse das Rohrelement in das Lagerelement eingeschoben, besonders bevorzugt über einen Rastmechanismus darin gehalten. Das Herausziehen des Rohrelements aus dem Lagerelement wird dann durch eine Hinterschneidung zumindest erschwert. Dazu kann an dem Rohrelement oder vorzugsweise an dem Lagerelement bspw. ein Vorsprung vorgesehen sein, der nach Art eines Sägezahns mit einer flachen und einer steilen Flanke geformt ist, wobei die flache Flanke das Einschieben des Rohrelements ermöglicht, die steile Flanke jedoch ein ungewolltes Herausziehen hindert.

Auch unabhängig von der mehrstückigen Ausgestaltung erstreckt sich ein Rohrelement der Durchführungshülse bei montierter Leitungsdurchführung vorzugsweise in die Durchlassöffnung hinein; in anderen Worten durchsetzt die Durchführungshülse die durch die Flanschteil-Anlage festgelegte Ebene. Besonders bevorzugt durchsetzt das Rohrelement der Durchführungshülse das Wandelement vollständig (von der Seitenfläche zur entgegengesetzten und ggf. darüber hinaus).

Bei einer bevorzugten Weiterbildung der mehrstückigen Durchführungshülse ist das Lagerelement im Gesamten aus dem weichen Material geformt (es wird auf die vorstehende Definition des "weichen Materials" und die entsprechenden Shore-Werte verwiesen). Das weiche Material kann bspw. ein Gummimaterial sein, vorzugsweise synthetisches Gummimaterial, etwa auf der Basis von synthetischem Kautschuk. Das synthetische Kautschukmaterial kann bspw. Styrol, Butadien, Styrolacrylat, Reinacrylat bzw. Vinylacetat als Bestandteil aufweisen. Das Lagerelement kann bspw. auch ein Pressteil sein, also durch Pressen in eine Form und Vulkanisieren darin hergestellt sein; eine Durchgangsöffnung für die Leitung kann bspw. nachträglich eingebracht werden. Andererseits ist auch ein Herstellen durch Spritzgießen möglich, wobei dann ein thermoplastischer Elastomer (TPE) als weiches Material bevorzugt ist.

Ist das Lagerelement im Gesamten aus dem weichen Material vorgesehen, kann dieses dann vorteilhafterweise auch zu dem Rohrelement hin dichten, welches bevorzugt in das Lagerelement eingeschoben ist (siehe vorne). Aufgrund des weichen Materials kann das Lagerelement dann beim Einschieben des Rohrelements auch lokal ein Stück weit verformt werden, bevor etwa ein vorstehend genannter Rastmechanismus greift. Entlang der Richtung der Mittenachse erstreckt sich das in das Lagerelement eingesetzte Rohrelement bevorzugt in einen tatsächlich der Lagerung dienenden Abschnitt des Lagerelements zumindest hinein. Im bevorzugten Fall eines Kugelgelenks erstreckt sich das Rohrelement dann also bspw. über mindestens 30 %, 50 % bzw. 70 % des Durchmessers einer dem Kugelgelenk zugrunde liegenden Kugel in dieser Kugel (es kann die Kugel auch vollständig durchsetzten). Ist das Lagerelement dabei aus dem weichen Material und das Rohrelement aus einem im Vergleich dazu härteren Material vorgesehen, kann das Rohrelement die mechanische Stabilität im Bereich der Lagerung erhöhen, das Lagerelement zugleich jedoch gut dichtend am Flanschteil anliegen.

Das Material des Rohrelements kann bspw. eine Shore-Härte (D) von mindestens 65, 70 bzw. 75 Shore und von höchstens 95, 90 bzw. 85 Shore haben, jeweils in der Reihenfolge der Nennung zunehmend bevorzugt (Ober- und Untergrenze können auch unabhängig voneinander von Interesse sein). Das Rohrelement kann bspw. aus Acryl-Butadien-Styrol (ABS) oder Polyethylen (PE) vorgesehen sein. Für das Rohrelement kann bspw. auch ein Kunststoffmaterial mit Polycarbonat, Polyamid, Polystyrol, Polymethylmethacrylat, Polyethylenterephthalat, Polybutylenterephthalat, Acrylester-Styrol-Acrylnitril bzw. Styrol-Acrylnitril als Bestandteil vorgesehen sein.

Dieselben Materialien kommen auch für das Flanschteil infrage (auch unabhängig von einer mehrstückigen Durchführungshülse). Besonders bevorzugt ist das Flanschteil aus ABS vorgesehen. Generell kann die Shore-Härte des Flanschteils bevorzugt in dem im vorstehenden Absatz für das Material des Rohrelements genannten Bereich liegen und sollen dieselben Werte auch hierfür offenbart sein.

Vorzugsweise ist die Leitungsdurchführung zur Montage in einer Durchlassöffnung in einem Wand- oder Bodenelement aus Mauerwerk oder Beton ausgelegt, also bspw. einer betonierten oder aufgemauerten Gebäudewand. Die Montage der Leitungsdurchführung erfolgt dann mit einer fließfähigen Füllsubstanz, bspw. einem Zweikomponenten-Material, dessen Komponenten zur Reaktion gebracht werden und infolgedessen härten. In allgemeinen Worten meint "Füllsubstanz" jedes zunächst zumindest viskos-zähflüssig fließfähige Material, das unter Druck bewegbar ist, dann im Zeitverlauf jedoch zumindest teilweise aushärtet (infolge einer Reaktion verschiedener Komponenten und/oder durch Luftkontakt).

Außenseitig der Durchführungshülse, und zwar eines sich nach der Montage innerhalb der Durchlassöffnung erstreckenden Abschnitts davon, ist ein Füllvolumen angeordnet. Dieses kann im einfachsten Fall dann bei in die Durchlassöffnung gesetzter Durchführungshülse von dieser gemeinsam mit der Laibung der Durchlassöffnung begrenzt werden, sodass sich die Füllsubstanz jeweils direkt an die Durchführungshülse und die Laibung anlegt. Andererseits kann außenseitig der Durchführungshülse auch ein Mantel aus einem flexiblen Material vorgesehen sein, in welchen die Füllsubstanz injiziert wird und der die bspw. noch nicht angehärtete, noch vergleichsweise flüssige Füllsubstanz räumlich beisammen halten kann.

Dieser Mantel aus bspw. einem Elastomermaterial kann unter dem Druck der Füllsubstanz expandiert werden und sich an die Laibung der Durchlassöffnung anlegen. Vorzugsweise sind in dem Mantel Austrittsöffnungen vorgesehen, etwa Schlitze, aus denen die Füllsubstanz unter einen gewissen Druck austritt, um sich dann auch direkt an die Laibung der Durchlassöffnung anzulegen. Ein solcher Mantel ist indes nicht obligatorisch, die Füllsubstanz kann auch direkt einem von Durchführungshülse und Laibung begrenzten Ringvolumen zugeführt werden.

Vorzugsweise ist, um dem Füllvolumen die Füllsubstanz zuzuführen, eine Austrittsöffnung in der Durchführungshülse vorgesehen, über welche die Füllsubstanz durch einen Zuführkanal innerhalb der Durchführungshülse kommend aus dieser aus- und damit in das Füllvolumen eintreten kann. Den Zuführkanal begrenzt ein in der Durchführungshülse angeordnetes Zuführrohr, wobei es zwei Möglichkeiten gibt: Der Zuführkanal kann inner- oder außerhalb davon liegen. Liegt er innerhalb des Zuführrohrs, wird dieses dann nach der Füllsubstanzzufuhr aus der Durchführungshülse genommen. Das Zuführrohr kann dann also jedenfalls während der Füllsubstanzzufuhr in der Durchführungshülse angeordnet sein und kann deren Innenvolumen deshalb im Wesentlichen ausfüllen (was einen entsprechend großen Zuführkanal erlaubt). Wird das Zuführrohr im Anschluss an die Füllsubstanzufuhr herausgenommen, steht das Innenvolumen zum Hindurchführen einer Leitung zur Verfügung.

Ist der Zuführkanal außerhalb des Zuführrohrs angeordnet, also zwischen der Durchführungshülse und dem Zuführrohr, kann dieses auch einstückig mit dem Rohrelement der Durchführungshülse vorgesehen sein (vgl. die Ausführungsbeispiele zur Illustration). Dabei ist eine koaxiale Anordnung von Zuführrohr und Rohrelement der Durchführungshülse bevorzugt; das Zuführvolumen ist vorzugsweise ein Kreisringvolumen. Das Zuführrohr kann in der Durchführungshülse verbleiben; das Zuführrohr begrenzt in seinem Inneren ein Volumen, durch welches die Leitung hindurchführbar ist. Das Zuführrohr und das Rohrelement der Durchführungshülse können zur Erhöhung der Stabilität bspw. über Materialbrücken miteinander verbunden sein, bspw. sich von der Mittenachse weg und in einer zu dieser parallelen Richtung erstreckende Stege.

Unabhängig von der Anordnung des Zuführkanals im Einzelnen ist bei montierter Leitungsdurchführung die Austrittsöffnung in der Durchführungshülse innerhalb der Durchlassöffnung angeordnet. Vorzugsweise ist das dem Lagerelement entgegengesetzte Ende der Durchführungshülse für ein Injizieren der Füllsubstanz ausgelegt, ist also an diesem Ende bspw. ein Anschlussstück angeordnet, an welches zum Beispiel eine Kartuschenpistole angeschlossen werden kann. Über das Anschlussstück tritt die Füllsubstanz in den Zuführkanal, um dann über die Austrittsöffnung in das Füllvolumen zu gelangen. Vorzugsweise ist die Lagerung der Durchführungshülse (an dem Flanschteil) auf einer Seite des Wandelements angeordnet und erfolgt das Zuführen der Füllsubstanz von der entgegengesetzten Seite.

Die Füllsubstanzzufuhr kann also von derselben Seite vorgenommen werden, auf der bspw. auch eine vorstehend genannte Spannvorrichtung angeordnet werden kann, um das Flanschteil über die Durchführungshülse in seinen Sitz an der Seitenfläche des Wandelements zu ziehen. Obligatorisch ist eine Montage mittels Spannvorrichtung indes übrigens nicht, das Flanschteil kann bspw. auch an dem Wandelement verschraubt werden. Auch in diesem Fall wird der Ringraum zwischen Durchführungshülse und Laibung der Durchlassöffnung dann jedoch vorzugsweise mit Füllsubstanz aufgefüllt.

Im Allgemeinen ist für das Zuführen der Füllsubstanz übrigens auch das innerhalb der Durchführungshülse angeordnete Zuführrohr nicht zwingend erforderlich, sondern könnte die Füllsubstanz bspw. auch über einen neben der Durchführungshülse in die Durchlassöffnung geschobenen Schlauch zugeführt werden, etwa dem Ringraum direkt oder einem Füllvolumen innerhalb eines Mantels. Die Anordnung innerhalb der Durchführungshülse ist jedoch insoweit vorteilhaft, als sie so der Durchmesser der Durchlassöffnung verringern lässt. Es muss also bspw. eine Durchlassöffnung kleineren Durchmessers gebohrt werden; dies kann insbesondere bei den vorliegend angedachten schrägen Durchlassöffnungen von Vorteil sein, weil das Schrägbohren ohnehin eine Herausforderung darstellt. Diese nimmt mit dem Durchmesser zu, es muss dann beispielsweise eine Lafette oder dergleichen zur Führung installiert werden, was zusätzlichen Aufwand bedeutet (der so entfallen kann).

Im Falle des Zuführrohrs mit dem Zuführkanal innerhalb ist ein Ende des Zuführrohrs vorzugsweise verschlossen, und zwar das Ende, mit welchem das Zuführrohr in die Durchführungshülse eingeschoben wird. Am entgegengesetzten Ende kann bspw. eine Kartuschenpistole angeschlossen werden, und die Füllsubstanz tritt dann an einer seitlichen Öffnung in dem Zuführrohr aus diesem aus und idealerweise direkt durch die Austrittsöffnung der Durchführungshülse in das Füllvolumen. Die Austrittsöffnung in dem Zuführrohr und jene in der Durchführungshülse liegen bei der Füllsubstanzzufuhr also vorzugsweise deckungsgleich.

Unabhängig von der Anordnung des Zuführkanals im Einzelnen können eine Mehrzahl Austrittsöffnungen in der Durchführungshülse bevorzugt sein, die bspw. umlaufend angeordnet sind und/oder über einen Abschnitt in Bezug auf die Richtung der Längsachse verteilt sind. Bevorzugt können bspw. mindestens 5, 10, 15, 20, 25 bzw. 30 Austrittsöffnungen sein (in der Reihenfolge der Nennung zunehmend bevorzugt); mögliche Obergrenzen können bspw. bei 200 bzw. 100 Austrittsöffnungen liegen. Die Austrittsöffnungen können in Umlaufrichtung und/oder entlang der Mittenachse vorzugsweise äquidistant verteilt sein.

Wie bereits erwähnt, betrifft die Erfindung auch Montageverfahren für eine Leitungsdurchführung bzw. die entsprechende Verwendung einer solchen und sollen die vorstehend offenbarten Merkmale ausdrücklich auch in dieser Hinsicht offenbart sein. Das Montageverfahren umfasst die Schritte:
- Anordnen von Flanschteil und Seitenfläche des Wandelements in Anlage aneinander;
- Ausrichten der Durchführungshülse derart, dass sich die Durchführungshülsen-Mittenachse im Wesentlichen parallel zu einer Längsrichtung der Durchlassöffnung erstreckt, vorzugsweise derart, dass eine Mittenachse der Durchlassöffnung und die Durchführungshülsen-Mittenachse zusammenfallen;
- Befestigen der Leitungsdurchführung an/in dem Wandelement, vorzugsweise durch Einbringen einer Füllsubstanz (siehe vorne).

Vorzugsweise wird die Durchführungshülse, also jedenfalls ein Abschnitt davon, in die Durchlassöffnung gesetzt; besonders bevorzugt wird ein zwischen Durchführungshülse und Laibung der Durchlassöffnung angeordnetes Füllvolumen anschließend mit der Füllsubstanz aufgefüllt. Die Leitungsdurchführung ist dann so gegen das Wandelement gedichtet und in der Durchlassöffnung lagefixiert gehalten (gegen ein Herausziehen beim üblichen Gebrauch gesichert).

Die Verfahrensschritte müssen nicht unbedingt in der Reihenfolge ihrer Nennung durchgeführt werden, es kann bspw. auch zuerst die Durchführungshülsen-Mittenachse parallel zur Durchlassöffnungs-Längsrichtung ausgerichtet werden, und zwar bereits durch das Einschieben der Durchführungshülse in die Durchlassöffnung. Erst dann kommt das Flanschteil in Anlage an die Seitenfläche des Wandelements. Unabhängig von der Reihenfolge der beiden Schritte ("Anordnung in Anlage" und "Ausrichten") wird die Leitungsdurchführung im Anschluss daran befestigt. Anschließend wird vorzugsweise eine Leitung durch die Durchführungshülse und damit das Wandelement hindurchgeführt.

Bei einer bevorzugten Ausführungsform wird die Leitungsdurchführung im Falle einer gegenüber der Flächennormalen verkippten Durchlassöffnung im Gesamten in einer Drehposition bezogen auf einen Umlauf um die Flächennormale derart angeordnet, dass eine Mittenachse der Durchlassöffnung in der Verkippebene liegt. Es wird also bspw. eine Verkippung der Durchlassöffnungs-Mittenachse zu der Flächennormalen dann anteilig durch die bereits für sich verkippte Mittenstellung und eine Verkippung der Durchführungshülsen-Mittenachse in der Lagerung ausgeglichen wird.

Nach der Montage der Leitungsdurchführung wird vorzugsweise eine Leitung hindurchgeführt. Wenngleich dies im Allgemeinen bspw. auch eine Wasser- oder Gasleitung sein kann, handelt es sich vorzugsweise um eine Stromleitung oder besonders bevorzugt eine Telekommunikationsleitung, insbesondere Glasfaserbasiert, bzw. auch um ein Leerrohr zur Aufnahme einer solchen Leitung. Die Durchführungshülse kann auch eine Mehrzahl Leitungen aufnehmen, also mindestens eine und vorzugsweise nicht mehr als vier bzw. drei Leitungen. Vorzugsweise ist auch im Falle mehrerer Leitungen ein einziges durchgehendes, insbesondere zylinderförmiges Volumen innerhalb eines Rohrelements der Durchführungshülse vorgesehen. Eine endseitig der Durchführungshülse in dieses Volumen mündende Durchgangsöffnung für die Leitung kann einen im Vergleich zu dem Volumen geringeren Durchmesser haben, vorzugsweise ist im Falle mehrerer Leitungen jeweils eine eigene Durchgangsöffnung vorgesehen.

Im Folgenden wird die Erfindung anhand eines Ausführungsbeispiels näher erläutert, wobei die einzelnen Merkmale im Geltungsbereich der nebengeordneten Ansprüche auch in anderer Kombination erfindungswesentlich sein können und in dieser Form offenbart sein sollen.

Im Einzelnen zeigt
- Figur 1: eine erfindungsgemäße Leitungsdurchführung im montierten Zustand (0-Stellung) in einer geschnittenen Seitenansicht;
- Figur 2: die Leitungsdurchführung gemäß Figur 1 in einer andern Montagesituation, nämlich im Falle einer um 45° geneigten Durchlassöffnung;
- Figur 3: die Leitungsdurchführung gemäß den Figuren 1 und 2 in einer Seitenansicht.

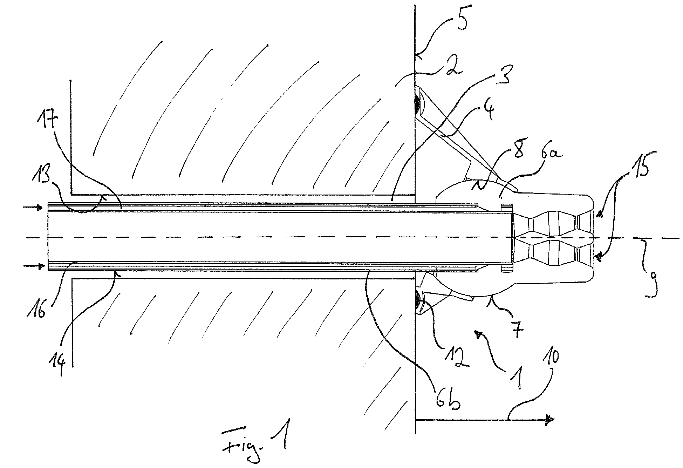

Figur 1 zeigt eine erfindungsgemäße Leitungsdurchführung 1, die in einer Gebäudewand 2 montiert ist. Die Leitungsdurchführung 1 ist in eine Durchlassöffnung 3 der Gebäudewand gesetzt und mit einem (nicht gezeigten) Zweikomponenten-Harz gegen die Gebäudewand 2 gedichtet.

Mit einem Flanschteil 4 liegt die Leitungsdurchführung 1 an einer Seitenfläche 5 der Gebäudewand 2 an. An dem Flanschteil 4 ist eine Durchführungshülse 6 verkippbar gelagert, welche sich in ein Lagerelement 6a und ein dazu mehrstückiges Rohrelement 6b gliedert. Die Durchführungshülse 6 ist über das Lagerelement 6a an dem Flanschteil 4 gelagert. Das Gelenk der Lagerung ist dabei ein Kugelgelenk, sowohl eine Anlagefläche 7 der Durchführungshülse 6 als auch eine Anlagefläche 8 des Flanschteils 4 sind also jeweils sphärisch. Die Anlagefläche 8 am Flanschteil 4 ist konvex, jene 7 an der Durchführungshülse 6 konkav; die Durchführungshülse 6 weist also den Kugelkopf des Kugelgelenks auf und das Flanschteil 4 das Pfannenteil.

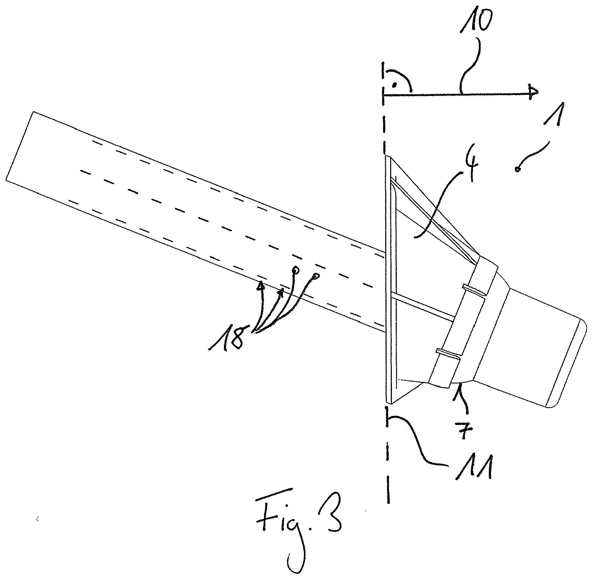

Infolge dieser Lagerung ist die Durchführungshülse 6 relativ zum Flanschteil 4 verkippbar, kann also ein Winkel zwischen einer Mittenachse 9 der Durchführungshülse und einer Flächennormalen 10 verändert werden. Letztere 10 steht senkrecht auf der Seitenfläche 5 der Gebäudewand 2 und damit auf einer Ebene 11, welche durch die Flanschteil-Anlage definiert wird und bei montierter Leitungsdurchführung 1 mit der Seitenfläche 5 der Gebäudewand 2 zusammenfällt, vgl. Figur 3 ohne Gebäudewand zur Illustration.

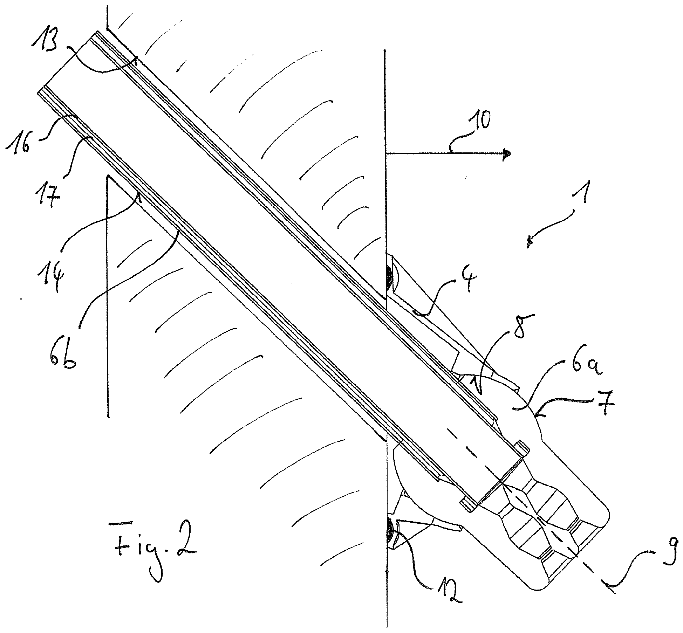

Ein Vergleich der Figuren 1 und 2 illustriert, wie die erfindungsgemäße Leitungsdurchführung 1 auch im Falle einer die Gebäudewand 2 schräg durchsetzenden Durchlassöffnung 3 montiert werden kann. Eine solche schräge Durchlassöffnung 3 kann bspw. von Interesse sein, wenn ein Kabel, insbesondere eine Kommunikationsleitung, im Gebäudeinneren (Erdgeschoß) oberhalb des Fussbodens austreten, sich außenseitig jedoch vollständig im Erdreich erstrecken soll (was bspw. einer Beschädigung vorbeugen kann).

Mit allein der Kugelgelenk-Lagerung kann die Durchführungshülsen-Mittenachse um rund 45 ° verkippt werden. Bei der erfindungsgemäßen Leitungsdurchführung 1 ist nun jedoch die Durchführungshülsen-Mittenachse 9 bereits in einer Mittenstellung, welche die Durchführungshülse 6 zwischen zwei Endstellungen einnimmt, bereits für sich gegenüber der Flächennormalen 10 verkippt, und zwar um rund 22,5°. Figur 1 zeigt die Durchführungshülse 6 in einer Endstellung, Figur 2 in der anderen Endstellung. Zwischen diesen Endstellungen maximaler Verkippung liegt die Mittenstellung, in welcher die Durchführungshülse 6 der Leitungsdurchführung 1 gemäß Figur 3 angeordnet ist.

Indem die Durchführungshülse 6 dann in der Lagerung zu der einen Endstellung hinbewegt wird, kann die Durchführungshülse 1 in Durchlassöffnungen 3 geringerer Neigung montiert werden (Figur 1). Wird die Durchführungshülse 6 hingegen zu der anderen Endstellung hinbewegt, kann die Leitungsdurchführung 1 in stärker geneigten Durchlassöffnungen 3 montiert werden (Figur 2).

Die Durchführungshülsen-Mittenachse 9 liegt in den beiden Endstellungen und der Mittenstellung in einer gemeinsamen Verkippebene, welche bei den Figuren 1 und 2 mit der Schnittebene zusammenfällt. Die Durchführungshülse 6 kann mit einer Bewegung von der einen in die andere Endstellung gebracht werden, bei welcher Bewegung die Durchführungshülsen-Mittenachse 9 fortwährend in der Verkippebene liegt und die Durchführungshülse 6 die Mittenstellung passiert.

Das Flanschteil 4 ist ein Spitzgussteil aus ABS. In einer gebäudewandseitigen, umlaufenden Ausnehmung davon ist ein Dichtring 12 angeordnet, der dann an der Seitenfläche 5 der Gebäudewand 2 anliegt und das Flanschteil 4 gegen diese dichtet.

Die Durchführungshülse 6 ist mehrstückig aus dem Rohrelement 6b und dem Lagerelement 6a aufgebaut. Ersteres 6b ist ein Extrusionsteil aus ABS oder PE, letzteres 6a ein Spritzgussteil aus einem thermoplastischen Elastomer mit einer Shore-Härte (A) von rund 35 Shore. Die Shore-Härte (D) des ABS des Flanschteils liegt bei rund 80 Shore, das Flanschteil ist also ein vergleichsweise hartes Kunststoffteil. Bei der Montage der Leitungsdurchführung 1 wird von der der Seitenfläche 5 entgegengesetzten Wandseite her eine Zugspannung auf die Durchführungshülse 6 aufgebracht, wobei das (weiche) Lagerelement 6a in einen dichtenden Sitz am Flanschteil 4 gezogen wird. Lagerelement 6a und Flanschteil 4 sind gegeneinander gedichtet.

Sobald bei der Montage die Zugspannung mit einer (nicht gezeigten) Spanneinrichtung aufgebracht ist, wird zur endgültigen Befestigung der Leitungsdurchführung dem zwischen Laibung 13 der Durchlassöffnung 3 und Durchführungshülse 6 begrenzten Ringraum ein Zweikomponenten-Harz zugeführt. Dieser expandiert und legt sich dichtend an sowohl die Außenwand 14 des Rohrelements 6b als auch die Laibung 13 der Durchgangsöffnung. Nach dem Härten des Zweikomponenten-Harzes ist die Leitungsdurchführung 1 auch lagefixiert, die Spanneinrichtung kann abgenommen und ein Kabel hindurchgeführt werden.

Die vorliegende Leitungsdurchführung 1 ist für zwei Glasfaserkabel ausgelegt, in dem Lagerelement 6a sind zwei Durchgangsöffnungen 15 für jeweils ein Kabel vorgesehen. Ein durch die Durchgangsöffnung 15 über die übrige Durchführungshülse 6 durch die Wand in das Gebäude geführtes Kabel wird innerhalb des Lagerelements, und zwar konkret innerhalb der Durchgangsöffnung 15, gegen die Leitungsdurchführung 1 gedichtet. Dazu kann beispielsweise eine Membran in der Durchgangsöffnung vorgesehen sein, welche mit dem Kabel durchstoßen wird und dann dagegen dichtet.

Nochmals zum Zweikomponenten-Harz: Um dieses dem Ringraum in der Durchlassöffnung 3 zuzuführen, ist in der Durchführungshülse 6, konkret in dem Rohrelement 6b, ein weiteres Rohr als Zuführrohr 16 angeordnet. Dieses begrenzt gemeinsam mit dem Rohrelement 6b der Durchführungshülse 6 einen Zuführkanal 17, der in einer zur Mittenachse 9 senkrechten Schnittebene betrachtet kreisringförmig ist (von Zuführrohr 16 und Rohrelement 6b verbindenden Stegen abgesehen).

An dem dem Lagerelement 6a entgegengesetzten Ende der Durchführungshülse 6 wird dem Zuführkanal 17 das Zweikomponenten-Harz zugeführt. Dazu kann bspw. ein Stopfen in das Zuführrohr 16 gesetzt und anschließend eine Kappe mit einem Anschlussstutzen auf die Durchführungshülse 6b gesetzt werden. Ein über den Anschlussstutzen zugeführtes Zweikomponenten-Harz tritt aufgrund des Stopfens dann nicht in das Zuführrohr 16 ein, sondern breitet sich in dem Zuführkanal 17 in Richtung des Lagerelements 6a aus (die Pfeile in Figur 1 symbolisieren die Zuführrichtung des Harzes).

Damit das Zweikomponenten-Harz dann in den Ringraum eintreten kann, sind in dem Rohrelement 6b der Durchführungshülse 6 eine Vielzahl vorliegend schlitzförmiger Austrittsöffnungen vorgesehen (vgl. Fig. 3). Die Austrittsöffnungen 18 sind entlang der Mittenachse 9 und in Umlaufrichtung äquidistant verteilt, das Zweikomponenten-Harz tritt über den Ringraum verteilt aus den Austrittsöffnungen 18 aus. Nach dem Härten des Zweikomponenten-Harzes ist die Leitungsdurchführung 1 einerseits gegen die Gebäudewand 2 gedichtet und andererseits lagefixiert in der Durchlassöffnung 3 gehalten.

## Patentansprüche

1. Leitungsdurchführung (1) zum Hindurchführen einer Leitung durch eine Durchlassöffnung (3) in einem Wand- oder Bodenelement (2), mit einer Durchführungshülse (6), durch welche die Leitung entlang einer Mittenachse (9) der Durchführungshülse (6) hindurchführbar ist, und
einem Flanschteil (4) zur Anlage an einer Seitenfläche des Wand- oder Bodenelements (2),
wobei die Durchführungshülse (6) an dem Flanschteil (4) verkippbar gelagert ist, und zwar zur Veränderung eines Kippwinkels zwischen der Durchführungshülsen-Mittenachse (9) und einer Flächennormalen (10), welche senkrecht auf einer durch die Flanschteil-Anlage festgelegten Ebene (11) und somit der Seitenfläche (5) des Wand- oder Bodenelements (2) bei montierter Leitungsdurchführung (1) steht,
in welcher Lagerung die Durchführungshülse (6) zwischen zwei Endstellungen verkippt werden kann und mittig dazwischen eine Mittenstellung einnimmt, wobei die Durchführungshülsen-Mittenachse (9) in den Endstellungen und der Mittenstellung in einer gemeinsamen Verkippebene liegt, **dadurch gekennzeichnet, dass** die Durchführungshülsen-Mittenachse (9) in der Mittenstellung gegenüber der Flächennormalen (10) um mindestens 10° verneigt ist.

2. Leitungsdurchführung (1) nach Anspruch 1, bei welcher die Durchführungshülsen-Mittenachse (9) in einer der beiden Endstellungen zu der Flächennormalen (10) um mindestens 40° verkippt liegt.

3. Leitungsdurchführung (1) nach Anspruch 1 oder 2, bei welcher in einer Kippstellung der Durchführungshülse (6), vorzugsweise in einer der beiden Endstellungen, die Durchführungshülsen-Mittenachse (9) parallel zu der Flächennormalen (10) liegt.

4. Leitungsdurchführung (1) nach einem der vorstehenden Ansprüche, bei welcher das Flanschteil (4) und die Durchführungshülse (6) mehrstückig zueinander sind und jeweils eine Anlagefläche (7, 8) haben, welche Anlageflächen (7, 8) als ein Gelenk der Lagerung in Kontakt miteinander sind, wobei die Anlageflächen (7, 8) in einem in der Verkippebene liegenden Schnitt betrachtet jeweils kreisförmig sind.

5. Leitungsdurchführung (1) nach Anspruch 4, bei welcher das Gelenk ein Kugelgelenk mit Kugelkopf und Pfannenteil ist, also die Anlageflächen (7, 8) sphärisch sind.

6. Leitungsdurchführung (1) nach Anspruch 5, bei welcher der Kugelkopf mit einer Hinterschneidung in dem Pfannenteil des Kugelgelenks gehalten ist, vorzugsweise reversibel herausnehm- und wieder einsetzbar.

7. Leitungsdurchführung (1) nach Anspruch 5 oder 6, bei welcher der Kugelkopf an der Durchführungshülse (6) und das Pfannenteil an dem Flanschteil (4) vorgesehen ist.

8. Leitungsdurchführung (1) nach einem der Ansprüche 4 bis 7, bei welcher zumindest eine der Anlageflächen (7, 8) zumindest bereichsweise aus einem weichen Material mit einer Shore-Härte (A) von höchstens 70 Shore geformt ist.

9. Leitungsdurchführung (1) nach einem der vorstehenden Ansprüche, bei welcher die Durchführungshülse (6) aus einem Rohrelement (6b) zum Hindurchführen der Leitung und einem dazu mehrstückigen Lagerelement (6a), welches an dem Flanschteil (4) verkippbar gelagert ist, aufgebaut ist.

10. Leitungsdurchführung (1) nach den Ansprüchen 8 und 9, bei welcher das Lagerelement (6a) im Gesamten aus dem weichen Material geformt ist.

11. Leitungsdurchführung (1) nach einem der vorstehenden Ansprüche zur Montage in einem Wand- oder Bodenelement (2) aus Mauerwerk oder Beton, bei welcher in der Durchführungshülse (6) eine Austrittsöffnung (18) vorgesehen ist, über welche einem Füllvolumen außenseitig der Durchführungshülse (6) zur Montage der Leitungsdurchführung (1) eine fließfähige Füllsubstanz zuführbar ist, wobei in der Durchführungshülse (6) ein Zuführrohr (16) vorgesehen ist, welches einen Zuführkanal (17) begrenzt, durch welchen die fließfähige Füllsubstanz der Austrittsöffnung (18) und über diese dem Füllvolumen zuführbar ist.

12. Leitungsdurchführung (1) nach einem der vorstehenden Ansprüche zur Montage in einem Wand- oder Bodenelement (2) aus Mauerwerk oder Beton, mit einem außenseitig der Durchführungshülse (6) vorgesehenen Mantel aus einem flexiblen Material, welcher ein Füllvolumen außenseitig der Durchführungshülse (6) begrenzt, dem zur Montage der Leitungsdurchführung (1) eine fließfähige Füllsubstanz zuführbar ist.

13. Verfahren zur Montage einer Leitungsdurchführung (1) nach einem der vorstehenden Ansprüche in einer Durchlassöffnung (3) in einem Wand- oder Bodenelement (2) aus Mauerwerk oder Beton, mit den Schritten:
- Anordnen des Flanschteils (4) der Leitungsdurchführung (1) in Anlage an einer Seitenfläche (5) des Wand- oder Bodenelements (2);
- Ausrichten der Durchführungshülse (6) derart, dass sich die Durchführungshülsen-Mittenachse (9) im Wesentlichen parallel zu einer Längsrichtung der Durchlassöffnung (3) erstreckt;
- Befestigen der Leitungsdurchführung (1) an dem Wand- oder Bodenelement (2), vorzugsweise durch Einbringen einer fließfähigen Füllsubstanz, welche dann erstarrt, in ein Füllvolumen außenseitig der Durchführungshülse (6) in der Durchlassöffnung (3).

14. Verfahren nach Anspruch 13 zur Montage der Leitungsdurchführung (1) in der Durchlassöffnung (3), die gegenüber der Flächennormalen (10) verkippt ist, bei welchem die Leitungsdurchführung (1) im Gesamten in einer Drehposition bezogen auf einen Umlauf um die Flächennormale (10) derart angeordnet wird, dass eine Mittenachse der Durchlassöffnung (3) in der Verkippebene liegt.

15. Verwendung einer Leitungsdurchführung (1) nach einem der vorstehenden Ansprüche zur Montage in einem Wand- oder Bodenelement (2), insbesondere aus Mauerwerk oder Beton, vorzugsweise gemäß einem Verfahren nach Anspruch 13 oder 14.

## Claims

1. A line duct (1) for leading a line through a through opening (3) in a wall or floor element (2), having
a duct sleeve (6) through which said line can be led through along a central axis (9) of said duct sleeve (6), and
a flange member (4) for contacting a side face of said wall or floor element (2),
wherein said duct sleeve (6) has a tiltable bearing at said flange member (4), namely for changing a tilt angle between said duct sleeve central axis (9) and a surface normal (10) lying perpendicularly to a plane (11) defined by the flange-member-contact and thus to said side face (5) of said wall or floor element (2) when said line duct (1) is mounted,
wherein said duct sleeve (6) can be tilted in said bearing between two end positions and can be brought into a central position in between, wherein said duct sleeve central axis (9) lies in the same tilt plane when being in said end positions and in said central position,
**characterized in that** said duct sleeve central axis (9) is, in said central position, tilted with respect to said surface normal (10) by at least 10°.

2. The line duct (1) according to claim 1, wherein said duct sleeve central axis (9) is, in one of the two end positions, tilted with respect to said surface normal (10) by at least 40°.

3. The line duct (1) according to claim 1 or 2, wherein said duct sleeve central axis (9) lies, in a tilt position of said duct sleeve (6), preferably in one of the two end positions, parallel to said surface normal (10).

4. The line duct (1) according to one of the preceding claims, wherein said flange member (4) and said duct sleeve (6) are multi-piece with respect to each other and have a contact area (7, 8) respectively, said contact areas (7, 8) being in contact with each other as a joint of said bearing, wherein said contact areas (7, 8) respectively have a circular shape seen in a section lying in said tilt plane.

5. The line duct (1) according to claim 4, wherein said joint is a ball joint having a ball shaped head and a ball socket, said contact areas (7, 8) being spherical thus.

6. The line duct (1) according to claim 5, wherein said ball shaped head is held in said ball socket of said ball joint by an undercut, preferably reversibly removable and reinsertable.

7. The line duct (1) according to claim 5 or 6, wherein said ball shaped head is provided at said duct sleeve (6) and said ball socket is provided at said flange member (4).

8. The line duct (1) according to one of the claims 4 to 7, wherein at least one of said contact areas (7, 8) is formed in at least a region of a soft material having a shore hardness (A) of not more than 70 Shore.

9. The line duct (1) according to one of the preceding claims, wherein said duct sleeve (6) is assembled from a tube element (6b) for leading through said line and a mounting element (6a) being multi-piece to said tube element, said mounting element having a tiltable bearing at said flange member (4).

10. The line duct (1) according to claims 8 and 9, wherein said mounting element (6a) is made as a whole of said soft material.

11. The line duct (1) according to one of the preceding claims for a mounting in a wall or floor element (2) of brick work or concrete, wherein an outlet opening (18) is provided in said duct sleeve (6), wherein a filling substance capable of flowing can be fed to a filling volume outside of said duct sleeve (6) via said outlet opening for mounting said line duct (1), a feed tube (16) being provided in said duct sleeve (6), which defines a feed channel (17) through which said filling substance capable of flowing can be fed to said outlet opening (18) and via the latter to said filling volume.

12. The line duct (1) according to one of the preceding claims for a mounting in a wall or floor element (2) of brick work or concrete, having a jacket of a flexible material on the outside of said duct sleeve (6), said jacket defining a filling volume on the outside of said duct sleeve (6), a filling substance capable of flowing being feedable to said filling volume for mounting said line duct (1).

13. A method for mounting a line duct (1) according to one of the preceding claims in a through opening (3) in a wall or floor element (2) of brick work or concrete, comprising the steps:
- placing said flange member (4) of said line duct (1) in contact at a side face (5) of said wall or floor element (2);
- aligning said duct sleeve (6) such that said duct sleeve central axis (9) extends basically in parallel to a length direction of said through opening (3);
- fixing said line duct (1) at said wall or floor element (2), preferably by feeding a filling substance capable of flowing, which hardens then, into a filling volume on the outside of said duct sleeve (6) in said through opening (3).

14. The method according to claim 13 for mounting said line duct (1) in said through opening (3) which is tilted with respect to said surface normal (10), wherein said line duct as a whole is arranged in a rotational position with respect to a rotation around said surface normal (10) in such a way that a central axis of said through opening (3) lies in said tilt plane.

15. Use of the line duct (1) according to one of the preceding claims for a mounting in a wall or floor element (2), in particular of brick work or concrete, preferably by a method according to claim 13 or 14.

## Revendications

1. Passage (1) pour câble ou conduite, permettant la traversée d'un câble ou d'une conduite par une ouverture de passage (3) pratiquée dans un élément de cloison ou de sol (2), comportant:
un manchon de passage (6) dans lequel peut passer le câble ou la conduite le long d'un axe médian (9) du manchon de passage (6), et
une partie de collerette (4) destinée à s'appuyer contre une surface latérale de l'élément de cloison ou de sol (2);
le manchon de passage (6) étant monté basculant par rapport à la partie de collerette (4) pour ainsi permettre de modifier l'angle de basculement entre l'axe médian du manchon de passage (9) et une normale à la surface (10) qui est perpendiculaire à un plan (11) établi par l'appui de la partie de collerette et donc perpendiculaire à la surface latérale (5) de l'élément de cloison ou de sol (2) une fois le passage (1) fixé,
ce montage permettant au manchon de passage (6) de pouvoir être basculé entre deux positions terminales en prenant une position intermédiaire entre celles-ci, l'axe médian (9) du manchon de passage étant situé dans un plan de basculement commun dans les positions terminales et dans la position intermédiaire,
**caractérisé en ce que**, dans la position intermédiaire, l'axe médian (9) du manchon de passage est incliné d'au moins 10° par rapport à la normale à la surface (10).

2. Passage (1) selon la revendication 1, dans lequel, dans l'une des deux positions terminales, l'axe médian (9) du manchon de passage est basculé d'au moins 40° par rapport à la normale à la surface (10).

3. Passage (1) selon la revendication 1 ou 2, dans lequel, dans une position basculée du manchon de passage (6), de préférence dans l'une des deux positions terminales, l'axe médian (9) du manchon de passage est parallèle à la normale à la surface (10).

4. Passage (1) selon l'une des revendications précédentes, dans lequel la partie de collerette (4) et le manchon de passage (6) sont des éléments distincts l'un de l'autre et présentent chacun une surface d'appui (7, 8), lesquelles surfaces d'appui (7, 8) sont en contact l'une avec l'autre pour former une articulation du montage, lesdites surfaces d'appui (7, 8) étant chacune circulaires, vu selon une coupe dans le plan de basculement.

5. Passage (1) selon la revendication 4, dans lequel l'articulation consiste en un joint à rotule à tête sphérique et partie de cupule, les surfaces d'appui (7, 8) étant donc sphériques.

6. Passage (1) selon la revendication 5, dans lequel la tête sphérique est retenue dans la partie de cupule du joint à rotule grâce à une contre-dépouille, en pouvant de préférence être installée et retirée de manière réversible.

7. Passage (1) selon la revendication 5 ou 6, dans lequel la tête sphérique est prévue sur le manchon de passage (6) et la partie de cupule sur la partie de collerette (4).

8. Passage (1) selon l'une des revendications 4 à 7, dans lequel l'une au moins des surfaces d'appui (7, 8) est composée, au moins en partie, d'un matériau tendre dont la dureté Shore (A) ne dépasse pas 70 Shore.

9. Passage (1) selon l'une des revendications précédentes, dans lequel le manchon de passage (6) est constitué d'un élément tubulaire (6b) permettant le passage du câble ou de la conduite et d'un élément de palier (6a) qui lui est distinct et qui est monté basculant sur la partie de collerette (4).

10. Passage (1) selon les revendications 8 et 9, dans lequel l'élément de palier (6a) est composé en totalité dudit matériau tendre.

11. Passage (1) selon l'une des revendications précédentes destiné à être fixé dans un élément de cloison ou de sol (2) en maçonnerie ou en béton, dans lequel le manchon de passage (6) présente une ouverture de sortie (18) permettant d'apporter à un volume de remplissage extérieur au manchon de passage (6), pour la fixation du passage (1), une substance de remplissage susceptible d'être coulée, un tuyau d'amenée (16) délimitant un canal d'amenée (17) étant prévu dans le manchon de passage (6) et permettant d'apporter à l'ouverture de sortie (18), et finalement au volume de remplissage, la substance de remplissage susceptible d'être coulée.

12. Passage (1) selon l'une des revendications précédentes destiné à être fixé dans un élément de cloison ou de sol (2) en maçonnerie ou en béton, comportant une gaine extérieure au manchon de passage (6) réalisée dans un matériau souple, qui délimite un volume de remplissage extérieur au manchon de passage (6) et à laquelle est apportée, pour la fixation du passage (1), une substance de remplissage susceptible d'être coulée.

13. Procédé de fixation d'un passage (1) selon l'une des revendications précédentes dans une ouverture de passage (3) pratiquée dans un élément de cloison ou de sol (2) en maçonnerie ou en béton, comportant les étapes suivantes:
- mise en place de la partie de collerette (4) du passage (1) en appui sur une surface latérale (5) de l'élément de cloison ou de sol (2);
- orientation du manchon de passage (6) de manière que l'axe médian (9) du manchon de passage soit sensiblement parallèle au sens longitudinal de l'ouverture de passage (3);
- solidarisation du passage (1) dans l'élément de cloison ou de sol (2), de préférence par apport d'une substance de remplissage susceptible d'être coulée, laquelle subit ensuite un durcissement, dans un volume de remplissage extérieur au manchon de passage (6) dans l'ouverture de passage (3).

14. Procédé selon la revendication 13 pour la fixation du passage (1) dans l'ouverture de passage (3) selon une position basculée par rapport à la normale à la surface (10), dans lequel le passage (1) est disposé en totalité dans une position pivotée reposant sur une rotation par rapport à la normale à la surface (10) qui est telle qu'un axe médian de l'ouverture de passage (3) se trouve dans le plan de basculement.

15. Utilisation d'un passage (1) selon l'une des revendications précédentes destiné à être fixé dans un élément de cloison ou de sol (2), notamment en maçonnerie ou en béton, de préférence suivant un procédé selon la revendication 13 ou 14.
